# FASCICULE DE BREVET EUROPEEN

(11) **EP 2 695 523 B1**
(45) Date de publication et mention de la délivrance du brevet: **17.09.2014**
(21) Numéro de dépôt: 13178489.4
(22) Date de dépôt: 30.07.2013
(51) Int. Cl.: A23G 1/00, A23G 1/54, A23G 3/20, A23G 3/34, A23L 1/00

(54) **Procédé d'isolation du contenu de remplissage d'un produit alimentaire**
Verfahren zum Isolieren des Füllinhalts eines Lebensmittelprodukts
Method for isolating the filling content of a food product

(30) Priorité: 07.08.2012 BE 201200529
(43) Date de publication de la demande: 12.02.2014
(73) Titulaire: N.N.T., 786 Lessines (BE)
(72) Inventeur: Willems, Tippawan, 1831 Diegem (BE); Wongjampa, Nid, 1831 Diegem (BE); Seron, Valérie Jacqueline, 4540 Jehay (BE)
(74) Mandataire: Coulon, Ludivine

(56) Documents cités:
- EP-A1- 1 378 174
- EP-A1- 2 191 723
- EP-A2- 0 166 446
- FR-A1- 2 188 961
- GB-A- 1 198 386
- US-A- 2 682 471
- US-A- 3 769 039

## Description

La présente invention se rapporte à un procédé d'isolation du contenu de remplissage d'un produit alimentaire comprenant les étapes séquentielles suivantes :
- une première étape consistant à fournir, dans un moule présentant une face supérieure, au moins une coque formée au départ d'un matériau moulable comestible, cette coque présentant au moins une paroi interne et une ouverture de remplissage,
- une deuxième étape consistant à appliquer au moins une couche de revêtement comprenant au moins un corps gras sur ladite au moins une paroi interne de ladite coque en matériau moulable pour former une couche de revêtement interne isolante,
- une troisième étape consistant à introduire ledit contenu de remplissage dudit produit alimentaire dans ladite coque en matériau moulable par ladite ouverture de remplissage,
- une quatrième étape consistant à appliquer au moins une couche de recouvrement comprenant au moins un corps gras sur ledit contenu de remplissage pour obtenir une couche de recouvrement isolante continue se liant à ladite couche de revêtement interne isolante,
- une cinquième étape consistant à fermer ladite ouverture de remplissage de ladite coque par application de matériau moulable comestible sur ladite couche de recouvrement isolante continue.

Un tel procédé est connu par exemple du document EP1378174 portant sur le remplissage d'un produit alimentaire avec une substance. L'isolation du contenu de remplissage est effectuée pour permettre une conservation plus longue des produits alimentaires remplis obtenus. Plus particulièrement, ce document divulgue un procédé permettant d'isoler un fourrage humide d'un produit alimentaire. Une première étape consiste à appliquer, sur les parois internes d'une coque préalablement moulée au départ d'un produit comestible, une ou plusieurs couches d'isolation comprenant un corps gras ou un mélange de corps gras. Une seconde étape consiste à appliquer le contenu de remplissage dans ladite coque moulée dont les parois ont préalablement été enduites par au moins un corps gras. Une troisième étape consiste à appliquer une ou plusieurs couches d'isolation comprenant un corps gras ou un mélange de corps gras sur la partie supérieure et visible dudit contenu de remplissage. Finalement, ladite coque est refermée par application de produit alimentaire sur la couche comprenant au moins un corps gras et couvrant ledit contenu de remplissage pour former un couvercle de ladite coque. Ce procédé est plus précisément d'application lorsque les produits de remplissage présentent une consistance crémeuse ou pâteuse, par exemple pour des produits de remplissage tels que les yogourts crémeux visqueux ou pâteux.

Un tel procédé est également connu du document US2682471. Selon ce document, le contenu est isolé du contenant (coque en chocolat) par une couche de corps gras (du beurre de cacao). Plus particulièrement, ce document porte sur une isolation, dans une coque en chocolat, d'une substance visqueuse et sirupeuse (ou substance « cordialisée »). Il s'agit donc de l'isolation d'une substance qui contient inévitablement du sucre, sans quoi un sirop visqueux ou une substance « cordialisée » ne peuvent être obtenus. D'ailleurs, afin que le contenu de remplissage ne s'écoule pas en-dehors du contenant, il est indispensable qu'il contienne une forte proportion de sucre, lequel, par séchage et/ou cristallisation, permet de colmater des microfissures inévitablement présentes selon le procédé d'isolation mis en oeuvre dans le document US2682471. En effet, selon ce procédé, une première couche de corps gras est appliquée dans une coque en chocolat puis un contenu de remplissage est introduit dans cette coque avant d'être recouvert par une deuxième couche de corps gras qui se soude à la première. Cette fixation par soudure laisse inévitablement subsister des microfissures à la zone de jonction entre les deux couches de corps gras. Sans cristallisation et/ou séchage du sucre présent dans le contenu de remplissage au niveau des microfissures, ce contenu de remplissage peut gagner la surface de la coque en chocolat qui est elle-même perméable.

Malheureusement, comme on peut le constater, ces procédés connus de l'état de la technique ne permettent pas d'isoler un contenu liquide tel que par exemple de l'alcool, par exemple de l'alcool sans sucre ou sirop ajouté. En effet, il n'est tout d'abord pas concevable d'appliquer une ou plusieurs couches comprenant au moins un corps gras lorsque ledit contenu de remplissage est totalement liquide : les couches à base de corps gras ne formeraient pas une pellicule protectrice continue adhérant de façon adéquate au contenu de remplissage mais surnageraient sur ledit contenu de remplissage liquide. Or, en appliquant les procédés connus de l'état de la technique, une isolation adéquate du contenu de remplissage d'un produit alimentaire ne peut être obtenue que si ladite ou lesdites couches d'isolation sont continues et forment un film ou revêtement tout autour dudit contenu de remplissage.

En outre, selon ces procédés connus de l'état de la technique, la présence inévitable de microfissures à la zone de jonction entre les deux couches de corps gras (première couche de corps gras appliquée dans la coque en chocolat et deuxième couche de corps gras appliquée sur le contenu introduit dans cette même coque) constitue une problématique récurrente lors de l'isolation d'un contenu de remplissage. Comme mentionné plus haut, seule la présence de sucre ou de sirop ajouté dans le contenu de remplissage ou la présence d'un contenu de remplissage très visqueux permet d'assurer un colmatage de ces microfissures par séchage et/ou cristallisation dans les microfissures mêmes, plus particulièrement à la zone de jonction entre les deux couches de corps gras susdites. Il n'est donc possible, selon les procédés actuels, que d'isoler des contenus sirupeux et visqueux mais certainement pas des contenus liquides non sucrés et/ou présentant une viscosité telle que celle de l'eau.

Le document FR2188961 porte également sur le remplissage d'un produit alimentaire.

L'invention a pour but de pallier les inconvénients de l'état de la technique en procurant un procédé permettant d'isoler n'importe quel contenu de remplissage, c'est-à-dire aussi bien des contenus de remplissage crémeux, pâteux ou moelleux que des contenus de remplissage totalement liquides (c'est-à-dire présentant une viscosité telle que celle de l'eau ou contenant de l'eau), sucrés ou non sucrés, alcoolisés ou non.

Pour résoudre ce problème, il est prévu suivant l'invention, un procédé d'isolation du contenu de remplissage d'un produit alimentaire tel qu'indiqué au début, caractérisé en ce que lesdites deuxième et quatrième étapes sont précédées d'un refroidissement jusqu'à une température de l'ordre de -25°C à 30°C. et en ce que ladite cinquième étape est précédée par une étape de réchauffement de ladite face supérieure dudit moule.

à une température au moins égale à la température de fusion des corps gras formant respectivement ladite au moins une couche de revêtement sur ladite au moins une paroi interne de ladite coque et ladite au moins une couche de recouvrement sur ledit contenu de remplissage.

Un tel procédé selon l'invention, lors duquel lesdites deuxième et quatrième étapes sont précédées par une étape de refroidissement et lors duquel ladite cinquième étape est précédée par une étape de réchauffement de ladite face supérieure dudit moule, particulièrement de la zone de jonction entre ladite couche de revêtement interne isolante et ladite couche de recouvrement du contenu de remplissage, permet d'isoler un contenu de remplissage totalement liquide d'un produit alimentaire et d'obtenir ainsi des produits alimentaires comprenant un contenu de remplissage sous forme totalement liquide.

En effet, dans le cadre de la présente invention, il a été montré, d'une part, que de tels refroidissements permettent d'assurer une adhérence optimale de ladite couche de revêtement interne isolante comprenant au moins un corps gras sur les parois internes de ladite coque moulée au départ d'un matériau moulable comestible. D'autre part, il a été démontré, dans le cadre de la présente invention, que l'étape de réchauffement de la face supérieure du moule, particulièrement de la zone de jonction entre ladite couche de revêtement interne isolante et ladite couche de recouvrement du contenu de remplissage, avant la fermeture de l'ouverture de remplissage de la coque permet d'éliminer toute présence et/ou formation de microfissures à la zone de jonction entre ladite couche de revêtement interne isolante et ladite couche de recouvrement du contenu de remplissage, ce qui assure une isolation parfaite du contenu de remplissage. En outre, ce réchauffement de la face supérieure du moule permet d'éviter que le matériau moulable comestible appliqué ne se solidifie trop rapidement et ne forme une couche fixe et durcie sur toute la surface dudit moule.

Une application d'une ou de plusieurs couches d'isolation comprenant au moins un corps gras sur les parois présentant une température de surface de l'ordre de -25°C à 30°C,de préférence de l'ordre de -10°C à 20°C, préférentiellement de l'odre de -5°C à 10°C, favorise la solidification des corps gras sous forme d'une couche d'isolation homogène et continue se fixant aux parois. C'est pourquoi, lorsqu'une substance de remplissage totalement liquide est appliquée dans ladite coque dont les parois ont été refroidies avant l'application d'au moins une couche de revêtement interne isolante comprenant au moins un corps gras, ladite couche de revêtement interne isolante reste stable et adhère aux parois de ladite coque moulée au départ d'un matériau moulable comestible.

Par ailleurs, de telles températures permettent de refroidir fortement ledit contenu de remplissage liquide, lequel peut ainsi, selon sa nature, soit changer de phase soit présenter une température de l'ordre de -25°C à 30°C, de préférence de l'ordre de -10°C à 20°C, préférentiellement de l'ordre de -5°C à 10°C. Une telle température dudit contenu de remplissage permet ainsi d'appliquer une ou plusieurs couches de recouvrement isolante continue comprenant au moins un corps gras sur une surface dont la température est de l'ordre -25°C à 30°C, de préférence de l'ordre de -10°C à 20°C, préférentiellement de l'ordre de - 5°C à 10°C et permet ainsi la solidification et uneadhérence optimale de ladite couche de recouvrement isolante continue comprenant au moins un corps gras. Par ailleurs, comme mentionné plus haut, une telle température favorise la solidification des corps gras qui vont ainsi former une couche d'isolation homogène et continue entourant ledit contenu de remplissage.

Dans le cadre de la présente invention, il a été montré que les plages de températures définies sont particulièrement adaptées puisque qu'une température trop importante (supérieure à 30°C) ne permet pas d'obtenir une adhérence correcte ni de ladite couche de revêtement interne isolante, ni de ladite couche de recouvrement isolante continue comprenant toutes deux au moins un corps gras tandis qu'une température trop faible (inférieure à -25°C) fait en sorte que la solidification de ces mêmes couches est trop rapide, ce qui conduit à la formation d'agrégats de corps gras et donc à une couche d'isolation non homogène.

L'écart de température entre les couches comprenant au moins un corps gras et les couches sur lesquelles sont appliquées ces couches comprenant au moins un corps gras détermine la rapidité de la solidification des corps gras. En effet, plus cet écart de température est important, plus les corps gras vont se solidifier rapidement sur la surface présentant une température inférieure à celle des corps gras appliqués. Par ailleurs, la température des corps gras appliqués doit toujours être inférieure à la température de fusion des surfaces (coque ou contenu de remplissage) sur lesquelles ils sont appliqués, ceci afin de ne pas faire fondre lesdites surfaces.

L'étape de réchauffement de la face supérieure du moule avant la fermeture de l'ouverture de remplissage de la coque est réalisée à une température au moins égale à la température de fusion des corps gras formant respectivement une première couche de corps gras (couche de revêtement interne isolante refroidie appliquée sur la paroi interne de la coque) et une deuxième couche de corps gras (couche de recouvrement sur le contenu de remplissage). Cette deuxième couche de corps gras est appliquée à une température supérieure à sa température de fusion et supérieure à celle de la couche de revêtement interne isolante refroidie sans toutefois dépasser la température de fusion de la coque afin de ne pas la détériorer. Ce réchauffement, par exemple réalisé à l'aide d'un chalumeau (industriel), permet de réaliser une fusion de ces deux couches de corps gras de telle sorte qu'elles s'unissent et fusionnent de façon homogène sans aucune formation de microfissures. En outre, puisque le contenu de remplissage a préalablement été refroidi, une fois que la fusion entre ces deux couches de corps gras (couche de revêtement interne et couche de recouvrement) a eu lieu sous l'effet dudit réchauffement, la température inférieure du contenu de remplissage permet de figer rapidement la fusion de ces deux couches de corps gras, ce qui contribue également à éviter toute présence et/ou formation de microfissures.

En outre, suivant l'invention, une étape de réchauffement additionnelle de la coque peut être effectuée pour assurer une fermeture correcte de celle-ci, ce qui est connu de l'état de la technique.

Par les termes « adhérence optimale », on entend, au sens de la présente invention, une adhérence telle qu'elle ne permet pas à ladite couche d'isolation de se détacher des parois sur lesquelles elle est appliquée lorsqu'une substance liquide entre en contact avec ladite couche d'isolation.

Par les termes « couche homogène et continue », on entend, au sens de la présente invention, une couche formant une pellicule ou un revêtement couvrant complètement le support sur lequel elle est appliquée. Une telle couche homogène et continue empêche notamment toute évaporation ou séchage du contenu de remplissage mais aussi toute contamination du contenu de remplissage par le matériau moulable comestible formant les parois de la coque dans laquelle est appliquée le contenu de remplissage.

Lorsque, selon le procédé de la présente invention, plusieurs couches successives comprenant au moins un corps gras sont appliquées les unes sur les autres, des étapes intermédiaires de refroidissement jusqu'à une température de l'ordre de -25°C à 30°Csont réalisées entre l'application de deux couches successives. Avantageusement, comme décrit plus haut, une application d'une couche comprenant au moins un corps gras sur une couche précédente refroidie à de telles températures permet l'obtention d'une adhérence optimale d'une couche homogène et continue.

Avantageusement, selon le procédé de la présente invention, ledit refroidissement est effectué jusqu'à une température de l'ordre de -10°C à 20°C.

Avantageusement, selon le procédé de la présente invention, ledit refroidissement est effectué jusqu'à une température de l'ordre de -5°C à 10°C.

De préférence, lors de ladite troisième étape, ledit contenu de remplissage est introduit dans la coque lorsqu'il présente une température tempérée ou qu'il est légèrement refroidi, ladite température étant définie en fonction dudit au moins un corps gras utilisé pour former ladite couche de revêtement interne isolante. En effet, il convient, selon la présente invention, que la température dudit contenu de remplissage ne favorise pas un décollement de ladite couche de revêtement interne isolante sous l'effet d'une température trop importante altérant l'adhérence de ladite couche de revêtement interne isolante sur les parois de la coque.

Avantageusement, selon le procédé de la présente invention, ladite coque est formée au départ d'un matériau moulable comestible choisi dans le groupe constitué du chocolat et de toute autre substance comestible présentant des propriétés rhéologiques similaires à celles du chocolat, et de leurs mélanges.

Selon la présente invention, plusieurs coques peuvent être juxtaposées et ainsi former un produit, par exemple une barre de chocolat, constitué d'un ensemble de coques, chacune contenant ou non un contenu de remplissage.

De préférence, selon le procédé de la présente invention, ladite au moins une couche de revêtement interne isolante comprenant au moins un corps gras est formée au départ de corps gras choisis dans le groupe constitué de l'huile de coco, de l'huile de palme, du beurre de cacao, du beurre de karité et de tout corps gras présentant des propriétés similaires en terme de solidification, et de leurs mélanges.

De préférence, selon le procédé de la présente invention, ladite au moins une couche de recouvrement isolante continue comprenant au moins un corps gras est formée au départ de corps gras choisis dans le groupe constitué de l'huile de coco, de l'huile de palme, du beurre de cacao, du beurre de karité et de tout corps gras présentant des propriétés similaires, et de leurs mélanges.

De tels corps gras sont comestibles et largement utilisés dans le domaine de l'alimentation. Ils sont donc particulièrement indiqués pour une utilisation telle que celle décrite dans la présente invention. Par ailleurs, ces corps gras permettent, selon le procédé de la présente invention, d'isoler un contenu de remplissage totalement liquide des parois d'une coque moulée au départ d'un matériau comestible (par exemple du chocolat), ceci en formant une couche homogène, continue et adhérant de façon optimale. Avantageusement, de telles propriétés de ladite couche permettent d'éviter toute contamination et/ou altération dudit contenu de remplissage qui conserve ainsi son gout, ses aromes et toutes ses propriétés rhéologiques ou autres.

Avantageusement, selon le procédé de la présente invention, ladite au moins une couche de revêtement interne isolante comprenant au moins un corps gras est appliquée à une température supérieure ou égale à la température de fusion dudit au moins un corps gras.

Avantageusement, selon le procédé de la présente invention, ladite au moins une couche de recouvrement isolante continue comprenant au moins un corps gras est appliquée à une température supérieure ou égale à la température de fusion dudit au moins un corps gras.

En effet, lorsque ledit au moins un corps gras présente une telle température, il peut être facilement appliqué par pulvérisation ou par badigeonnage de telle façon à former une pellicule homogène et continue sur la surface traitée, par exemple sur les parois d'une coque moulée dans un matériau comestible.

De préférence, selon le procédé de la présente invention, ledit contenu de remplissage dudit produit alimentaire est choisi dans le groupe constitué des contenus de remplissage crémeux, pâteux, moelleux et liquides, sucrés ou non sucrés, alcoolisés ou non.

De préférence, selon le procédé de la présente invention, ledit contenu de remplissage dudit produit alimentaire est de l'alcool mélangé ou non à au moins une autre substance de remplissage crémeuse, pâteuse, moelleuse ou liquide, sucrée ou non sucrée.

Par alcool, on entend, au sens de la présente invention, un alcool alimentaire comme par exemple de la vodka, du cognac, du whisky, du porto, des liqueurs ou du pastis. Ces alcools peuvent être par exemple mélangés avec du jus d'orange, des boissons énergisantes, des coulis de fruits, des pâtes de fruits ou toute autre substance de remplissage sucrée ou non sucrée.

De préférence, selon le procédé de la présente invention, ledit contenu de remplissage dudit produit alimentaire est un sirop ou un coulis alcoolisé ou non.

Le procédé selon l'invention permet en effet, grâce aux étapes de refroidissement appliquées selon la présente invention, d'isoler tout type de contenu de remplissage, que ce dernier soit pâteux, visqueux, crémeux ou totalement liquide, sucré ou non sucré, alcoolisé ou non.

Avantageusement, selon le procédé de la présente invention, de la chaire ou de la pulpe de fruits sont présents dans lesdits contenus de remplissage crémeux, pâteux, moelleux ou liquides, sucrés ou non sucrés, alcoolisés ou non.

Avantageusement, le procédé selon l'invention comprend en outre une étape de formation d'au moins un point d'appui dudit produit alimentaire, ledit au moins un point d'appui étant agencé pour former un pied sous ledit produit alimentaire. Un tel point d'appui permet d'assurer un passage d'air sous le produit alimentaire et favorise un mouvement de l'air autour de l'ensemble du produit alimentaire, ce qui permet de réduire et de retarder considérablement la fonte de la coque formée au départ d'un matériau moulable comestible, par exemple d'une coque en chocolat. Ce point d'appui permet en outre d'éviter tout contact direct du produit alimentaire avec une surface de support, ce qui permet de conférer au produit alimentaire une meilleure résistance aux températures ambiantes et d'éviter une altération de la coque, par exemple une fonte de la coque.

Par ailleurs, puisqu'un passage et une circulation de l'air sont favorisés par la présence d'au moins un tel point d'appui, la température interne de la coque et du produit alimentaire est réduite, ce qui permet aux couches de corps gras (de revêtement et de recouvrement) de mieux résister et de résister plus longtemps à une augmentation de la température ambiante. Il en résulte que les couches de corps gras sont d'autant mieux préservées et qu'elles assurent d'autant mieux une isolation du contenu de remplissage telle qu'obtenue selon le procédé de la présente invention. En effet, dans le cadre de la présente invention, il a été déterminé que la présence d'au moins un tel point d'appui permet aux produits alimentaires de se maintenir jusqu'à une température au moins supérieure de 4°C par rapport à la température de fonte généralement observée.

En outre, un tel point d'appui permet de réduire voire même d'éliminer les problèmes liés à la condensation régulièrement observés sur et à la partie basse des produits alimentaires, ce qui en optimise la conservation.

L'étape de formation des pieds peut être effectuée dans le moule lors de la formation même de la coque. Dans ce cas, le moule doit alors être prévu à cet effet. Cette étape peut également être effectuée suite au démoulage du produit alimentaire par apposition dudit au moins un point d'appui. Par exemple, lorsque le produit est encore dans le moule et que le matérieu moulable de fermeture est encore chaud ou tiède (malléable), on peut procéder à l'insertion d'un matériau comestible, dur à suffisamment dur, tel qu'un morceau de noisette ou d'amande. Il est également possible d'appliquer une substance comestible qui durcira sous forme de gouttes, de lignes ou sous toute autre forme permettant de former un espace suffisant entre ledit produit alimentaire et le support sur lequel il repose, ceci afin de faciliter un passage d'air (ou ventilation).

Selon l'invention, il est également prévu que la formation d'un tel point d'appui ait lieu lorsque le produit est froid, dans ou hors du moule. En effet, on peut appliquer sur le produit alimentaire, selon des méthodes connues, des gouttes, des lignes ou toute autre forme désirée d'une substance qui formera un espace suffisant entre ledit produit alimentaire et le support sur lequel il repose afin de faciliter la ventilation.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence à la figure annexée.

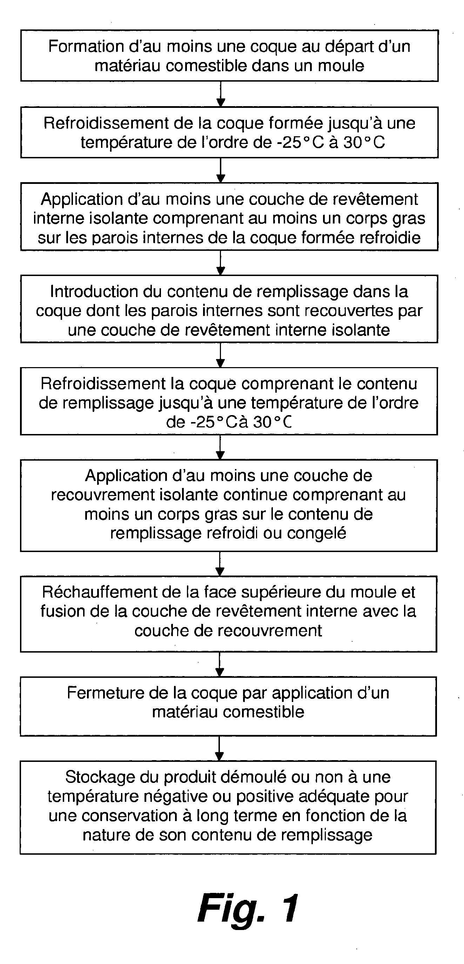

La figure 1 illustre la succession des étapes selon l'invention pour isoler le contenu de remplissage d'un produit alimentaire.
Les figures 2A et 2B illustrent une isolation d'un contenu de remplissage selon l'invention.

Comme schématisé, une première étape consiste à former une coque au départ d'un matériau comestible dans un moule. Une seconde étape consiste à refroidir ladite coque formée lors de la précédente étape jusqu'à une température de l'ordre de -25°C à 30°C, de préférence de l'ordre de -10°C à 20°C, préférentiellement de l'ordre de - 5°C à 10°C afin que, lors d'une troisième étape los de laquelle à lieu l'application d'au moins une couche de revêtement interne isolante comprenant au moins un corps gras, cette couche de revêtement interne isolante forme une couche homogène, continue et adhérant de façon optimale aux parois de ladite coque. Une quatrième étape consiste à introduire ledit contenu de remplissage dans ladite coque dont les parois sont couvertes d'au moins une couche de revêtement interne isolante comprenant au moins un corps gras. Une cinquième étape consiste ensuite à refroidir ladite coque contenant ledit contenu de remplissage jusqu'à une température de l'ordre de -25°C à 30°C,de préférence de l'ordre de -10°C à 20°C, préférentiellement de l'odre de -5°C à 10°C afin que, lors d'une sixième étape lors de laquelle à lieu l'application d'au moins une couche de recouvrement isolante continue comprenant au moins un corps gras sur ledit contenu de remplissage, cette couche de recouvrement isolante continue forme une couche homogène, continue et adhérant de façon optimale au contenu de remplissage. Une étape supplémentaire consiste à procéder au réchauffement de la face supérieure du moule de telle sorte que ladite couche de revêtement interne refroidie fusionne avec ladite couche de recouvrement sans formation de microfissures afin d'isoler totalement le contenu de remplissage du contenant et par conséquent du milieu extérieur. Une dernière étape consiste alors à refermer ladite coque par application d'un matériau comestible sur ladite couche de recouvrement isolante continue et homogène préalablement appliquée sur ledit contenu de remplissage. Les produits alimentaires remplis obtenus sont ensuite soit démoulés soit laissés dans ledit moule et stocké à un endroit sec et à une température comprise de préférence entre 1°C et 18°C selon le ontenu de remplissage considéré. Par exemple, une température de l'ordre de 1 °C à 10°C est préférée lorsque ledit contenu de remplissage est à base de fruit. Une température de l'ordre de 1°C à 15°C est préféée lorsque ledit contenu de remplissage comprend un alcool. Une température de l'ordre de 1°C à 18°C est préférée lorsque ledit contenu de remplissage comprend du café.

Il est bien entendu que les produits obtenus peuvent également être conservés par congélation lorsqu'ils sont maintenus ou non dans un moule. Ainsi, les produits remplis démoulés ou non sont stockés à une température négative ou positive adéquate en fonction de la durée de la conservation souhaitée et en tenant compte de la nature du contenu pour assurer une conservation à long terme.

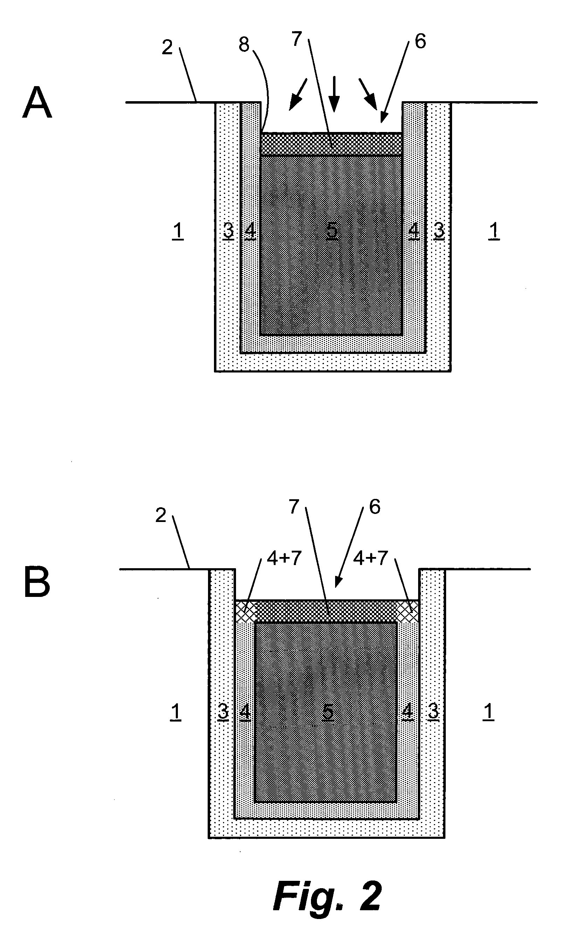

La figure 2A illustre un moule 1 présentant une face supérieure 2 dans lequel a été fournie une coque 3 (par exemple une coque en chocolat) dont les parois internes, après refroidissement, ont été recouvertes par au moins une couche de corps gras 4 formant une couche de revêtement interne isolante. Un contenu de remplissage 5 a été ensuite introduit, par une ouverture de remplissage 6, dans la coque 3 puis l'ensemble a été refroidi avant d'appliquer au moins une couche de recouvrement 7 comprenant au moins un corps gras sur ledit contenu de remplissage 6.

Comme illustré, ladite au moins une couche de recouvrement 7 comprenant au moins un corps gras se lie selon une ligne de soudure 8 à ladite au moins une couche de corps gras refroidie et donc froide 4 formant une couche de revêtement interne isolante. Une telle liaison selon une ligne de soudure 8 implique inévitablement la présence de microfissures permettant au contenu de remplissage 5 de gagner la coque 3.

Cependant, comme illustré à la figure 2B, suite au réchauffement (illustré par les flèches) de la face supérieure 2 du moule 1, ces deux couches de corps gras, présentant des températures initialement différentes au niveau de la ligne de soudure 8, fusionnent 4+7 au niveau de cette ligne de soudure 8 de telle sorte que la présence d'une ligne de soudure 8 est totalement éliminée. Par conséquent toute présence et/ou formation de microfissures est éliminée. En outre, puisque le contenu 5 ainsi que les éléments 1 à 4 illustrés ont été précédemment refroidis et qu'il présentent donc une température inférieure à celle de la zone où ont fusionnés les couches de corps gras 4+7 obtenue par fusion, cette zone de corps gras 4+7 est figée rapidement, ce qui contribue également à éviter toute présence et/ou formation de microfissures. Une telle fusion des couches de corps gras mentionnées ci-dessus garantit une étanchéité parfaite et donc une isolation parfaite du contenu de remplissage 5, que ce dernier soit totalement liquide, visqueux, sirupeux, « cordialisé » ou encore sucré ou non.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé d'isolation du contenu de remplissage d'un produit alimentaire comprenant les étapes séquentielles suivantes :
- une première étape consistant à fournir, dans un moule présentant une face supérieure, au moins une coque formée au départ d'un matériau moulable comestible, cette coque présentant au moins une paroi interne et une ouverture de remplissage,
- une deuxième étape consistant à appliquer au moins une couche de revêtement comprenant au moins un corps gras sur ladite au moins une paroi interne de ladite coque en matériau moulable pour former une couche de revêtement interne isolante,
- une troisième étape consistant à introduire ledit contenu de remplissage dudit produit alimentaire dans ladite coque en matériau moulable par ladite ouverture de remplissage,
- une quatrième étape consistant à appliquer au moins une couche de recouvrement comprenant au moins un corps gras sur ledit contenu de remplissage pour obtenir une couche de recouvrement isolante continue se liant à ladite couche de revêtement interne isolante,
- une cinquième étape consistant à fermer ladite ouverture de remplissage de ladite coque par application de matériau moulable comestible sur ladite couche de recouvrement isolante continue,
**caractérisé en ce que** lesdites deuxième et quatrième étapes sont précédées d'un refroidissement jusqu'à une température de l'ordre de - 25°C à 30°C et **en ce que** ladite cinquième étape est précédée par une étape de réchauffement de ladite face supérieure dudit moule à une température au moins égale à la température de fusion des corps gras formant respectivement ladite au moins une couche de revêtement sur ladite au moins une paroi interne de ladite coque et ladite au moins une couche de recouvrement sur ledit contenu de remplissage.

2. Procédé d'isolation du contenu de remplissage d'un produit alimentaire selon la revendication 1, **caractérisé en ce que** le dit refroidissement est effectué jusqu'à une température de l'ordre de - 10°C à 20°C.

3. Procédé d'isolation du contenu de remplissage d'un produit alimentaire selon la revendication 1, **caractérisé en ce que** le dit refroidissement est effectué jusqu'à une température de l'ordre de -5°C à 10°C.

4. Procédé d'isolation du contenu de remplissage d'un produit alimentaire selon l'une des quelconques revendications 1 à 3, **caractérisé en ce que** ladite coque est formée au départ d'un matériau moulable comestible choisi dans le groupe constitué du chocolat et de toute autre substance comestible présentant des propriétés rhéologiques similaires à celles du chocolat, et de leurs mélanges.

5. Procédé d'isolation du contenu de remplissage d'un produit alimentaire selon l'une des quelconques revendications 1 à 4, **caractérisé en ce que** ladite au moins une couche de revêtement interne isolante comprenant au moins un corps gras est formée au départ de corps gras choisis dans le groupe constitué de l'huile de coco, de l'huile de palme, du beurre de cacao, du beurre de karité et de tout corps gras présentant des propriétés similaires en terme de solidification, et de leurs mélanges.

6. Procédé d'isolation du contenu de remplissage d'un produit alimentaire selon l'une des quelconques revendications 1 à 5, **caractérisé en ce que** ladite au moins une couche de recouvrement isolante continue comprenant au moins un corps gras est formée au départ de corps gras choisis dans le groupe constitué de l'huile de coco, de l'huile de palme, du beurre de cacao, du beurre de karité et de tout corps gras présentant des propriétés similaires, et de leurs mélanges.

7. Procédé d'isolation du contenu de remplissage d'un produit alimentaire selon les revendications 5 ou 6, **caractérisé en ce que** ladite au moins une couche de revêtement interne isolante comprenant au moins un corps gras est appliquée à une température supérieure ou égale à la température de fusion dudit au moins un corps gras.

8. Procédé d'isolation du contenu de remplissage d'un produit alimentaire selon les revendications 5 ou 6, **caractérisé en ce que** ladite au moins une couche de recouvrement isolante continue comprenant au moins un corps gras est appliquée à une température supérieure ou égale à la température de fusion dudit au moins un corps gras.

9. Procédé d'isolation du contenu de remplissage d'un produit alimentaire selon l'une des quelconques revendications 1 à 8, **caractérisé en ce que** ledit contenu de remplissage dudit produit alimentaire est choisi dans le groupe constitué des contenus de remplissage crémeux, pâteux, moelleux et liquides, sucrés ou non sucrés, alcoolisés ou non.

10. Procédé d'isolation du contenu de remplissage d'un produit alimentaire selon l'une des quelconques revendications 1 à 9, **caractérisé en ce que** ledit contenu de remplissage dudit produit alimentaire est de l'alcool mélangé ou non à au moins une autre substance de remplissage crémeuse, pâteuse, moelleuse ou liquide, sucrée ou non sucrée.

11. Procédé d'isolation du contenu de remplissage d'un produit alimentaire selon l'une des quelconques revendications 1 à 10, **caractérisé en ce que** ledit contenu de remplissage dudit produit alimentaire est un sirop ou un coulis alcoolisé ou non.

12. Procédé d'isolation du contenu de remplissage d'un produit alimentaire selon l'une des quelconques revendications 1 à 11, **caractérise en ce que** de la chaire ou de la pulpe de fruits sont ajoutés dans lesdits contenus de remplissage crémeux, pâteux, moelleux ou liquides, sucrés ou non sucrés, alcoolisés ou non.

13. Procédé d'isolation du contenu de remplissage d'un produit alimentaire selon l'une des quelconques revendications 1 à 12, **caractérisé en ce qu'**il comprend en outre une étape de formation d'au moins un point d'appui dudit produit alimentaire, ledit au moins un point d'appui étant agencé pour former un pied sous ledit produit alimentaire.

## Patentansprüche

1. Verfahren zur Isolierung des Füllinhalts eines Nahrungsmittels, umfassend die folgenden aufeinanderfolgenden Schritte:
- einen ersten Schritt, der darin besteht, in eine Form, die eine Oberseite aufweist, mindestens Schale einzubringen, die aus einem essbaren formbaren Material besteht, wobei diese Schale mindestens eine Innenwand und eine Füllöffnung aufweist,
- einen zweiten Schritt, der darin besteht, mindestens eine Überzugsschicht, umfassend mindestens einen Fettkörper, auf die mindestens eine Innenwand der Schale aus formbarem Material aufzubringen, um eine isolierende innere Überzugsschicht zu bilden,
- einen dritten Schritt, der darin besteht, den Füllinhalt des Nahrungsmittels in die Schale aus formbarem Material durch die Füllöffnung einzubringen,
- einen vierten Schritt, der darin besteht, mindestens eine Abdeckschicht, umfassend mindestens einen Fettkörper, auf den Füllinhalt aufzubringen, um eine durchgehende isolierende Abdeckschicht zu erhalten, die sich mit der isolierenden inneren Überzugsschicht verbindet,
- einen fünften Schritt, der darin besteht, die Füllöffnung der Schale durch Aufbringen eines essbaren formbaren Materials auf die durchgehende isolierende Abdeckschicht zu verschließen,
**dadurch gekennzeichnet, dass** dem zweiten und dem vierten Schritt eine Abkühlung bis zu einer Temperatur von ungefähr 25 °C bis 30°C vorangeht, und dass dem fünften Schritt ein Schritt der Erhitzung der Oberfläche der Form auf eine Temperatur mindestens gleich der Schmelztemperatur der Fettkörper, die die mindestens eine Überzugsschicht auf der mindestens einen Innenwand der Schale bzw. die mindestens eine Abdeckschicht auf dem Füllinhalt bildet, vorangeht.

2. Verfahren zur Isolierung des Füllinhalts eines Nahrungsmittels nach Anspruch 1, **dadurch gekennzeichnet, dass** die Abkühlung bis zu einer Temperatur von ungefähr -10 °C bis 20 °C erfolgt.

3. Verfahren zur Isolierung des Füllinhalts eines Nahrungsmittels nach Anspruch 1, **dadurch gekennzeichnet, dass** die Abkühlung bis zu einer Temperatur von ungefähr-5 °C bis 10 °C erfolgt.

4. Verfahren zur Isolierung des Füllinhalts eines Nahrungsmittels nach einem der Ansprüche 1 bis 3, **dadurch gekennzeichnet, dass** die Schale am Anfang von einem essbaren formbaren Material gebildet ist, das in der Gruppe ausgewählt wird, bestehend aus Schokolade oder jeder anderen essbaren Substanz, die ähnliche rheologische Eigenschaften wie Schokolade aufweist, und ihren Gemischen.

5. Verfahren zur Isolierung des Füllinhalts eines Nahrungsmittels nach einem der Ansprüche 1 bis 4, **dadurch gekennzeichnet, dass** die mindestens eine isolierende innere Überzugsschicht, die mindestens einen Fettkörper umfasst, am Anfang von Fettkörpern gebildet ist, die in der Gruppe ausgewählt werden, bestehend aus Kokosöl, Palmöl, Kakaobutter, Karitébutter, oder jedem Fettkörper, der ähnliche Eigenschaften im Hinblick auf die Verfestigung aufweist, und ihren Gemischen.

6. Verfahren zur Isolierung des Füllinhalts eines Nahrungsmittels nach einem der Ansprüche 1 bis 5, **dadurch gekennzeichnet, dass** die mindestens eine durchgehende isolierende Überzugsschicht, die mindestens einen Fettkörper umfasst, am Anfang von Fettkörpern gebildet ist, die in der Gruppe ausgewählt werden, bestehend aus Kokosöl, Palmöl, Kakaobutter, Karitebutter oder jedem Fettkörper, der ähnliche Eigenschaften aufweist, und ihrem Gemischen.

7. Verfahren zur Isolierung des Füllinhalts eines Nahrungsmittels nach den Ansprüchen 5 oder 6, **dadurch gekennzeichnet, dass** die mindestens eine isolierende innere Überzugsschicht, die mindestens einen Fettkörper umfasst, bei einer Temperatur größer oder gleich der Schmelztemperatur des mindestens einen Fettkörpers aufgetragen wird.

8. Verfahren zur Isolierung des Füllinhalts eines Nahrungsmittels nach den Ansprüchen 5 oder 6, **dadurch gekennzeichnet**, das die mindestens eine durchgehende isolierende Überzugsschicht, die mindestens einen Fettkörper umfasst, bei einer Temperatur größer oder gleich der Schmelztemperatur des mindestens einen Fettkörpers aufgetragen wird.

9. Verfahren zur Isolierung des Füllinhalts eines Nahrungsmittels nach einem der Ansprüche 1 bis 8, **dadurch gekennzeichnet, dass** der Füllinhalt des Nahrungsmittels in der Gruppe ausgewählt wird, die von den cremigen, pastenartigen, schmelzenden und flüssigen Füllinhalten, gezuckert oder nicht, alkoholisch oder nicht gebildet ist.

10. Verfahren zur Isolierung des Füllinhalts eines Nahrungsmittels nach einem der Ansprüche 1 bis 9, **dadurch gekennzeichnet, dass** der Füllinhalt des Nahrungsmittels Alkohol ist der mit mindestens einer weiteren cremigen, pastenartigen, schmelzenden oder flüssigen Substanz, gezuckert oder nicht, gemischt ist oder nicht.

11. Verfahren zur Isolierung des Füllinhalts eines Nahrungsmittels nach einem der Ansprüche 1 bis 10, **dadurch gekennzeichnet, dass** der Füllinhalt des Nahrungsmittels ein Sirup oder eine Brühe, alkoholisch oder nicht, ist.

12. Verfahren zur Isolierung des Füllinhalts eines Nahrungsmittels nach einem der Ansprüche 1 bis 11, **dadurch gekennzeichnet, dass** Fruchtfleisch oder -mus zu den cremigen, pastenartigen, schmelzenden oder flüssigen Füllinhalten, gezuckert oder nicht, alkoholisch oder nicht, hinzugefügt wird.

13. Verfahren zur Isolierung des Füllinhalts eines Nahrungsmittels nach einem der Ansprüche 1 bis 12, **dadurch gekennzeichnet, dass** es ferner einen Schritt der Bildung mindestens eines Auflagepunktes des Nahrungsmittels umfasst, wobei der Auflagepunkt derart vorgesehen ist, dass er einen Fuß unter dem Nahrungsmittel bildet.

## Claims

1. A method for isolating the filling content of a food product comprising the following sequential steps:
- a first step consisting of providing, in a mold having an upper face, at least at one shell formed of initially with an edible moldable material, this shell having at least one internal wall and a filling aperture,
- a second step consisting of applying at least one coating layer comprising at least one fat on said at least one internal wall of said shell in a moldable material in order to form an insulating internal coating layer,
- a third step consisting of introducing said filling content of said food product into said shell in moldable material through said filling aperture,
- a fourth step consisting of applying at least one covering step comprising at least one fat on said filling content in order to obtain a continuous insulating covering layer binding to said insulating internal coating layer,
- a fifth step consisting of closing said filling aperture of said shell by applying an edible moldable material onto said continuous insulating covering layer,
**characterized in that** said second and fourth steps are preceded with cooling down to a temperature of the order of - 25°C to 30°C and **in that** said fifth step is preceded with a step for warming up said upper face of said mold to a temperature at least equal to the melting temperature of the fats respectively forming said at least one coating layer on said at least one internal wall of said shell and said at least one covering layer on said filling content.

2. A method for isolating the filling content of a food product according to claim 1, **characterized in that** said cooling is carried out down to a temperature of the order of - 10°C to 20°C.

3. The method for isolating the filling content of a food product according to claim 1, **characterized in that** said cooling is carried out down to a temperature of the order of - 5°C to 10°C.

4. The method for isolating the filling content of a food product according to claim 1, **characterized in that** said shell is initially formed from an edible moldable material selected from the group consisting of chocolates and of any other edible substance having rheological properties similar to those of chocolate, and mixtures thereof.

5. The method for isolating the filling content of a food product according to one of any claims 1 to 4, **characterized in that** said at least one insulating internal coating layer comprising at least one fat is initially formed from fats selected from the group consisting of coconut oil, palm oil, cocoa butter, shea butter, and of any fats having similar properties in terms of solidification, and mixtures thereof.

6. The method for isolating the filling content of a food product according to one of any claims 1 to 5, **characterized in that** said at least one continuous insulating covering layer comprising at least one fat is initially formed from fats selected from the group consisting of coconut oil, palm oil, cocoa butter, shea butter and of any fats having similar properties, and mixtures thereof.

7. The method for isolating the filling content of a food product according to claims 5 or 6, **characterized in that** said at least one insulating internal coating layer comprising at least one fat is applied at a temperature greater than or equal to the melting temperature of said at least one fat.

8. The method for isolating the filling content of a food product according claims 5 or 6, **characterized in that** said at least one continuous insulating covering layer comprising at least one fat, is applied at a temperature greater than or equal to the melting temperature of said at least one fat.

9. The method for isolating the filling content of a food product according to one of any claims 1 to 8, **characterized in that** said filling content of said food product is selected from the group consisting of creamy, pasty, soft and liquid filling contents, either sweetened or non-sweetened, either alcoholic or not.

10. The method for isolating the filling content of a food product according to one of any claims 1 to 9, **characterized in that** said filling content of said food product is alcohol either mixed or not with at least one other creamy, pasty, soft or liquid substance, either sweetened or non-sweetened.

11. The method for isolating the filling content of a food product according to one of any claims 1 to 10,6 **characterized in that** said filling content of said food product is a syrup or coulis, either alcoholic or not.

12. The method for isolating the filling content of a food product according to one of any claims 1 to 11, **characterized in that** some fruit flesh or pulp are added into said creamy, pasty, soft or liquid filling contents, either sweetened or non-sweetened, either alcoholic or not.

13. The method for isolating the filling content of a food product according to one of any claims 1 to 12, **characterized in that** it further comprises a step for forming at least one supporting point of said food product, said at least one supporting point being laid out so as to form a leg under said food product.
